# EUROPEAN PATENT SPECIFICATION

(11) **EP 2 935 448 B1**
(45) Date of publication and mention of the grant of the patent: **02.08.2017**
(21) Application number: 13828838.6
(22) Date of filing: 18.12.2013
(51) Int. Cl.: C08L 9/00, B60C 1/00, C08L 61/04, C08L 61/28, C08L 9/06

(54) **RUBBER COMPOUND COMPRISING POLYBUTADIENE IN THE POLYMER BASE**
KAUTSCHUKZUSAMMENSETZUNG MIT POLYBUTADIEN IN DER POLYMERBASIS
COMPOSÉ DE CAOUTCHOUC COMPRENANT DU POLYBUTADIÈNE DANS LA BASE POLYMÈRE

(30) Priority: 18.12.2012 IT RM20120645
(43) Date of publication of application: 28.10.2015
(73) Proprietor: Bridgestone Corporation, Tokyo 104-8340 (JP)
(72) Inventor: BOTTI, Francesco, I-00154 Roma (IT)
(74) Representative: Marchetti, Alessio
(86) International application number: PCT/IB2013/061114
(87) International publication number: WO 2014/097194

(56) References cited:
- WO-A1-2011/061598
- WO-A1-2012/026409
- JP-A- 2012 162 603
- US-A- 4 421 891
- US-A1- 2011 172 339
- US-A1- 2012 031 537
- US-A1- 2012 101 211
- US-B1- 6 376 587

## Description

### TECHNICAL FIELD

The present invention relates to a rubber compound comprising polybutadiene in the polymer base.

More specifically, the present invention relates to a tyre compound, and more specifically to a tread compound, to which the following description refers purely by way of example.

### BACKGROUND ART

The term 'cross-linkable, unsaturated-chain polymer base' is intended to mean any natural or synthetic, non-cross-linked polymer capable of assuming all the chemical, physical and mechanical characteristics typical of elastomers cross-linked (cured) with sulphur-based systems.

The term 'curing system' is intended to mean compounds, such as sulphur and accelerants, by which to cross-link the polymer base.

The term 'methylene donor compound' is intended to mean a compound capable of acting as a cross-linking agent by means of methylene bridges in the presence of a 'methylene acceptor compounds'.

Polybutadiene rubber is normally mixed with other types of rubber to produce various tyre portions, because of the advantages it affords in terms of wear, abrasion and shear resistance.

However, compounds with a polymer base composed of a mixture of rubbers comprising polybutadiene pose the problem of dispersing the reinforcing filler, such as carbon black or silica, in the polymer base. In fact, the reinforcing filler disperses less in polybutadiene rubber than in others, such as natural or styrene-butadiene rubber.

Uneven dispersion of the reinforcing filler invariably results in dissimilar technical characteristics of the compound, and hence in a tyre portion that is more easily subject to failure phenomena.

A common practice to solve this problem is to increase the reinforcing filler. But, though this provides for improvement in terms of abrasion resistance, it also reduces rolling resistance.

One possible solution to the problem is to functionalize the reinforcing filler to make it more similar to polybutadiene. Such a solution, however, is obviously complex and expensive, and therefore holds little interest industrially.

Another possible solution is to premix the polybutadiene rubber and the reinforcing filler separately. This has proved unsatisfactory, however, because of the poor affinity of polybutadiene rubber and the reinforcing filler, and the increase in hysteresis and therefore reduction in rolling resistance.

A method is therefore needed, which allows the use in compounds of polybutadiene rubber in a mixture of polymer bases, without producing any dissimilar technical characteristics of the compound or any reduction in rolling resistance.

The Applicant has surprisingly devised a method by which to solve the dissimilarity problem posed by the poor affinity of polybutadiene rubber and the reinforcing filler, while at the same time improving rolling resistance.

### DISCLOSURE OF INVENTION

One object of the present invention is a method of producing rubber compounds comprising a cross-linkable polymer base at least partly comprising polybutadiene; said method comprising a first mixing step in which the cross-linkable polymer base is mixed with at least one reinforcing filler; and said method being characterized by comprising a preliminary mixing step prior to said first mixing step, and in which only the polybutadiene of said polymer base is mixed with a reinforcing resin, with no reinforcing filler.

At said preliminary mixing step, the reinforcing resin preferably ranges from 1 to 70 parts, and even more preferably from 10 to 40 parts, per 100 parts of polybutadiene.

Preferably, said reinforcing resin comprises a methylene acceptor compound combined with a methylene donor compound.

Preferably, the methylene acceptor compound is a phenol formaldehyde resin.

Preferably, the methylene donor compound is hexamethoxymethyl melamine.

Preferably, the ratio in parts of the methylene acceptor compound to the methylene donor compound ranges from 2 to 10.

Preferably, the reinforcing filler comprises carbon black.

Preferably, in addition to polybutadiene, the cross-linkable polymer base also comprises natural rubber or styrene-butadiene rubber.

Another object of the present invention is a rubber compound produced using the method according to the present invention.

Another object of the present invention is a tyre portion made from a compound produced using the method according to the present invention; said portion preferably being the tread.

Another object of the present invention is a tyre comprising a portion made from a compound produced using the method according to the present invention.

### BEST MODE FOR CARRYING OUT THE INVENTION

The following are a number of non-limiting embodiments, purely by way of example, for a clearer understanding of the present invention.

### EXAMPLES

Four rubber compounds (A-D) were produced : compound A is a first control example representing a commonly used compound; compound B is a second control example containing a larger amount of reinforcing filler to improve abrasion resistance; compound C is a third control example, in which a reinforcing resin was added at the first mixing step; and compound D is an example of the invention, in which a preliminary mixing step is added to mix the polybutadiene with the reinforcing resin.

Compounds A-D were produced using the method described bellow :

### - compound production -

### (preliminary mixing step - only for compound D)

Prior to mixing, a 230-270-litre tangential-rotor mixer was loaded with the polybutadiene rubber, and the reinforcing resin composed of phenol formaldehyde resin combined with hexamethoxymethyl melamine.

The mixer was operated at a speed of 40-60 rpm, and the resulting mix was unloaded on reaching a temperature of 140-160°C.

### (first mixing step)

Prior to mixing, a 230-270-litre tangential-rotor mixer was loaded with the cross-linkable polymer base as a whole (including the polybutadiene from the preliminary mixing step for compound D), carbon black, silica, silane bonding agent, and, only for compound C, the reinforcing resin.

The mixer was operated at a speed of 40-60 rpm, and the resulting mix was unloaded on reaching a temperature of 140-160°C.

### (second mixing step)

The curing system was added to the mix from the first mixing step; the mixer was operated at a speed of 20-40 rpm; and the resulting mix was unloaded on reaching a temperature of 100-110°C.

Table I shows the compositions in phr of the four compounds.

**TABLE I**

| | A | B | C | D |
|---|---|---|---|---|
| S-SBR | 80 | | | |
| BR | 20* | | | 20** |
| Carbon black | 7.5 | | | |
| Silica | 55 | 75 | 55 | 55 |
| Silane bonding agent | 5.5 | 7.5 | 5.5 | 5.5 |
| Methylene acceptor compound | -- | -- | 5.0* | 5.0** |
| Methylene donor compound | -- | -- | 1.67* | 1.67** |
| Sulphur | 1.5 | | | |
| Accelerant | 3.2 | | | |

| | | | | |
|---|---|---|---|---|
| * added directly at the first mixing step. ** used at the preliminary mixing step. | | | | |

In Table I:
S-SBR is a styrene-butadiene rubber solution with a mean molecular weight of 800-1500x10³ and 500-900x10³ respectively, and containing 10-45% styrene, 20-70% vinyl, and 0-30% oil.

BR is a polybutadiene rubber with a 1,4 cis content of at least 40%.

The silica used is marketed by EVONIK as VN3, and has a surface area of 170m²/g.

The silane bonding agent used has the formula (CH₃CH₂O)₃Si(CH₂)₃SS(CH₂)₃Si(OCH₂CH₃)₃ and is marketed by EVAONIK as S175.

The methylene acceptor compound is phenol formaldehyde.

The methylene donor compound is hexamethoxymethyl melamine.

The accelerant is a mixture of TBBS, MBTS and DPG.

The compounds produced as described above were cured and tested for rolling and abrasion resistance.

The 60°C tanδ values for assessing rolling resistance were measured as per ISO Standard 4664. As anyone skilled in the art knows, the 60°C tanδ values are closely related to rolling resistance. More specifically, the lower the 60°C tanδ value, the better the rolling resistance.

Abrasion resistance was tested as per DIN Standard 53 516.

Table II shows the test results indexed with respect to control compound A.

**TABLE II**

| | A | B | C | D |
|---|---|---|---|---|
| tanδ at 60°C | 100 | 120 | 100 | 95 |
| Abrasion resistance | 100 | 107 | 100 | 111 |

As shown by the results in Table II, compound D produced using the method according to the present invention shows improved characteristics in terms of both rolling resistance (lower tanδ at 60°C value) and, surprisingly, abrasion resistance.

Comparison with compound C shows that, to achieve the advantages sought, it is not enough to simply use the reinforcing resin in the compound, but it must be premixed separately with the polybutadiene rubber as per the essential characteristic of the present invention.

## Claims

1. A method of producing rubber compounds comprising a cross-linkable polymer base at least partly comprising polybutadiene; said method comprising a first mixing step in which the cross-linkable polymer base is mixed with at least one reinforcing filler; and said method being **characterized by** comprising a preliminary mixing step prior to said first mixing step, and in which only the polybutadiene of said polymer base is mixed with a reinforcing resin, with no reinforcing filler.

2. A method as claimed in Claim 1, **characterized in that**, at said preliminary mixing step, the reinforcing resin ranges from 1 to 70 parts per 100 parts of polybutadiene.

3. A method as claimed in Claim 2, **characterized in that**, at said preliminary mixing step, the reinforcing resin ranges from 10 to 40 parts.

4. A method as claimed in any one of the foregoing Claims, **characterized in that** said reinforcing resin comprises a methylene acceptor compound combined with a methylene donor compound.

5. A method as claimed in Claim 4, **characterized in that** the methylene acceptor compound is a phenol formaldehyde resin.

6. A method as claimed in Claim 4 or 5, **characterized in that** the methylene donor compound is hexamethoxymethyl melamine.

7. A method as claimed in any one of Claims 4 to 6, **characterized in that** the ratio in parts of the methylene acceptor compound to the methylene donor compound ranges from 2 to 10.

8. A method as claimed in any one of the foregoing Claims, **characterized in that** the reinforcing filler comprises carbon black.

9. A method as claimed in any one of the foregoing Claims, **characterized in that**, in addition to polybutadiene, the cross-linkable polymer base also comprises natural rubber or styrene-butadiene rubber.

10. A rubber compound produced using the method according to anyone of the preceding claims.

11. A tyre portion, **characterized by** being made from a compound as claimed in Claim 10.

12. A tread, **characterized by** being made from a compound as claimed in Claim 10.

13. A tyre comprising a portion as claimed in Claim 11 or 12.

## Patentansprüche

1. Verfahren zum Herstellen von Gummimischungen, umfassend eine vernetzbare Polymerbasis, die mindestens teilweise Polybutadien umfasst; wobei das Verfahren einen ersten Mischungsschritt umfasst, in welchem die vernetzbare Polymerbasis mit mindestens einem verstärkenden Füllstoff vermischt wird; und wobei das Verfahren **dadurch gekennzeichnet ist, dass** es einen vorbereitenden Mischungsschritt vor dem ersten Mischungsschritt umfasst, und in welchem ausschließlich das Polybutadien der Polymerbasis mit einem verstärkenden Harz, ohne verstärkenden Füllstoff, gemischt wird.

2. Verfahren nach Anspruch 1, **dadurch gekennzeichnet, dass** in dem vorbereitenden Mischungsschritt das verstärkende Harz in einem Bereich von 1 bis 70 Teilen je 100 Teile Polybutadien vorliegt.

3. Verfahren nach Anspruch 2, **dadurch gekennzeichnet, dass** in dem vorbereitenden Mischungsschritt das verstärkende Harz in einem Bereich von 10 bis 40 Teilen vorliegt.

4. Verfahren nach einem der vorhergehenden Ansprüche, **dadurch gekennzeichnet, dass** das verstärkende Harz eine mit einer Methylendonatorverbindung kombinierte Methylenakzeptorverbindung umfasst.

5. Verfahren nach Anspruch 4, **dadurch gekennzeichnet, dass** die Methylenakzeptorverbindung ein Phenol-Formaldehyd-Harz ist.

6. Verfahren nach Anspruch 4 oder 5, **dadurch gekennzeichnet, dass** die Methylendonatorverbindung Hexamethoxymethylmelamin ist.

7. Verfahren nach einem der Ansprüche 4 bis 6, **dadurch gekennzeichnet, dass** das Teileverhältnis der Methylenakzeptorverbindung zur Methylendonatorverbindung im Bereich von 2 bis 10 liegt.

8. Verfahren nach einem der vorhergehenden Ansprüche, **dadurch gekennzeichnet, dass** der verstärkende Füllstoff Ruß umfasst.

9. Verfahren nach einem der vorhergehenden Ansprüche, **dadurch gekennzeichnet, dass** die vernetzbare Polymerbasis zusätzlich zu Polybutadien auch Naturkautschuk oder Styrol-Butadien-Kautschuk umfasst.

10. Gummimischung, hergestellt unter Verwendung des Verfahrens nach einem der vorstehenden Ansprüche.

11. Reifenabschnitt, **dadurch gekennzeichnet, dass** er aus einer Mischung nach Anspruch 10 hergestellt ist.

12. Lauffläche, **dadurch gekennzeichnet, dass** sie aus einer Mischung nach Anspruch 10 hergestellt ist.

13. Reifen, umfassend einen Abschnitt nach Anspruch 11 oder 12.

## Revendications

1. Procédé de production de composés de caoutchouc comprenant une base polymère réticulable comprenant au moins partiellement du polybutadiène ; ledit procédé comprenant une première étape de mélange dans laquelle la base polymère réticulable est mélangée à au moins une charge de renforcement ; et ledit procédé étant **caractérisé en ce qu'**il comprend une étape de mélange préliminaire avant ladite première étape de mélange, et dans laquelle seul le polybutadiène de ladite base polymère est mélangé à une résine de renforcement, sans aucune charge de renforcement.

2. Procédé selon la revendication 1, **caractérisé en ce que**, à ladite étape de mélange préliminaire, la résine de renforcement représente de 1 à 70 parties pour 100 parties de polybutadiène.

3. Procédé selon la revendication 2, **caractérisé en ce que**, à ladite étape de mélange préliminaire, la résine de renforcement représente de 10 à 40 parties.

4. Procédé selon l'une quelconque des revendications précédentes, **caractérisé en ce que** ladite résine de renforcement comprend un composé accepteur de méthylène combiné à un composé donneur de méthylène.

5. Procédé selon la revendication 4, **caractérisé en ce que** le composé accepteur de méthylène est une résine de phénol-formaldéhyde.

6. Procédé selon la revendication 4 ou 5, **caractérisé en ce que** le composé donneur de méthylène est l'hexaméthoxyméthyl-mélamine.

7. Procédé selon l'une quelconque des revendications 4 à 6, **caractérisé en ce que** le rapport en parties du composé accepteur de méthylène au composé donneur de méthylène va de 2 à 10.

8. Procédé selon l'une quelconque des revendications précédentes, **caractérisé en ce que** la charge de renforcement comprend du noir de carbone.

9. Procédé selon l'une quelconque des revendications précédentes, **caractérisé en ce que**, en plus du polybutadiène, la base polymère réticulable comprend également du caoutchouc naturel ou du caoutchouc styrène-butadiène.

10. Composé de caoutchouc produit en utilisant le procédé selon l'une quelconque des revendications précédentes.

11. Partie de pneumatique, **caractérisée en ce qu'**elle est fabriquée à partir d'un composé selon la revendication 10.

12. Bande de roulement, **caractérisée en ce qu'**elle est fabriquée à partir d'un composé selon la revendication 10.

13. Pneumatique comprenant une partie selon la revendication 11 ou 12.
